# EUROPEAN PATENT APPLICATION

(11) **EP 3 620 678 A1**
(43) Date of publication of application: **11.03.2020**
(21) Application number: 19195506.1
(22) Date of filing: 05.09.2019
(51) Int. Cl.: F16D 48/06

(54) **VEHICLE CONTROL DEVICE**

(30) Priority: 06.09.2018 JP 2018167277
(71) Applicant: TOYOTA JIDOSHA KABUSHIKI KAISHA, Aichi-ken, 471-8571 (JP)
(72) Inventor: KITAI, Shinya, Aichi-ken, 471-8571 (JP); YAMAMOTO, Kazuhiro, Aichi-ken, 471-8571 (JP)
(74) Representative: D Young & Co LLP

(57) **Abstract**

A vehicle control device according to the present invention is a vehicle control device equipped with a clutch-by-wire system capable of electrically controlling an engagement and a release of a clutch provided on a power transmission path between an engine and a drive wheel in response to a driver's operation of a clutch pedal, and includes a control unit to change operation feeling of the clutch pedal when a wear amount of the clutch exceeds a first threshold value. Moreover, the control unit may output warning information for urging maintenance of the clutch when the wear amount of the clutch exceeds the second threshold value less than the first threshold value. Further, the control unit may change operation feeling of the clutch pedal by limiting an output of an assist mechanism that assists an operation force of the clutch pedal.

## Description

### FIELD OF THE INVENTION

The present invention relates to a vehicle control device equipped with a clutch-by-wire system capable of electrically controlling engagement and release of a clutch provided on a power transmission path between an engine and a drive wheel in response to a driver's operation of a clutch pedal.

### TECHNICAL BACKGROUND

Patent Document 1 discloses a vehicle control device that warns a driver to urge replacement of a clutch when a wear amount of the clutch exceeds a first predetermined value, and limits a torque of an engine when the wear amount of the clutch exceeds a second predetermined value greater than the first predetermined value.

### PATENT DOCUMENT

Patent Document 1: Japanese Laid-open Patent publication No. 2013-047537
Patent Document 2: Japanese Laid-open Patent publication No. 2008-248915
Patent Document 3: Japanese Laid-open Patent publication No. 2018-066417

### SUMMARY OF THE INVENTION

### PROBLEM TO BE SOLVED BY THE INVENTION

In a vehicle equipped with a clutch-by-wire system, an operation amount (operation force) of a clutch pedal does not change regardless of a wear amount of the clutch. Therefore, when the vehicle control device described in Patent Document 1 is applied to a vehicle equipped with a clutch-by-wire system, a malfunction may occur. Specifically, even if warning is given as the wear amount of the clutch exceeds the first predetermined value, the driver continues traveling of the vehicle without being aware of the warning since an operation amount of the clutch pedal does not change, which may cause a state where traveling of the vehicle is disabled.

The present invention has been made in view of the above problem, and an object of the present invention is to provide a vehicle control device that allows a driver to recognize wear of a clutch even in a vehicle equipped with a clutch-by-wire system.

### MEANS TO SOLVE THE PROBLEM

A vehicle control device according to an embodiment of the present invention includes: a clutch-by-wire system electrically controlling an engagement and a release of a clutch, which is provided on a power transmission path between an engine and a drive wheel, in response to a driver's operation of a clutch pedal, and further includes: a control unit changing an operation feeling of the clutch pedal when a wear amount of the clutch exceeds a first threshold value.

In the vehicle control device according to an embodiment of the present invention, the control unit outputs warning information for urging a maintenance of the clutch when the wear amount of the clutch exceeds a second threshold value, which is less than the first threshold value. This allows the driver to be urged to perform maintenance on the clutch before the wear amount of the clutch exceeds a first threshold value.

In the vehicle control device according to an embodiment of the present invention, the control unit changes the operation feeling of the clutch pedal by limiting an output of an assist mechanism that assists an operation force of the clutch pedal. This allows the driver to feel discomfort and to recognize wear of the clutch in operating the clutch.

In the vehicle control device according to an embodiment of the present invention, the control unit changes the operation feeling of the clutch pedal by stopping an output of the assist mechanism that assists an operation force of the clutch pedal and switching from the clutch pedal to a hydraulic circuit capable of directly operating the clutch. This allows the driver to feel discomfort and to recognize a wear of the clutch in operating the clutch.

In the vehicle control device according to an embodiment of the present invention, the control unit changes the operation feeling of the clutch pedal by limiting an operation speed of the clutch by an assist mechanism that assists an operation force of the clutch pedal. This allows the driver to feel discomfort and to recognize a wear of the clutch in operating the clutch.

### EFFECT OF THE INVENTION

According to the vehicle control device according to the present invention, an operation feeling of the clutch pedal changes when a wear amount of the clutch exceeds the first threshold value. Therefore, the driver can be made to recognize the wear of the clutch even in a vehicle equipped with a clutch-by-wire system.

### BRIEF DESCRIPTION OF THE DRAWINGS

FIG. 1 is a schematic view illustrating a configuration of a vehicle applied with a vehicle control device according to an embodiment of the present invention;
FIG. 2 is a schematic view illustrating a configuration of a clutch and a connection and disconnection device;
FIG. 3 is a block diagram illustrating a configuration of a vehicle control device according to an embodiment of the present invention; and
FIG. 4 is a flow chart illustrating a clutch maintenance process according to an embodiment of the present invention.

### DETAILED DESCRIPTION OF THE PREFERRED EMBODIMENTS

Hereinafter, a configuration and an operation of a vehicle control device according to an embodiment of the present invention will be described with reference to the accompanied drawings.

### Configuration of vehicle

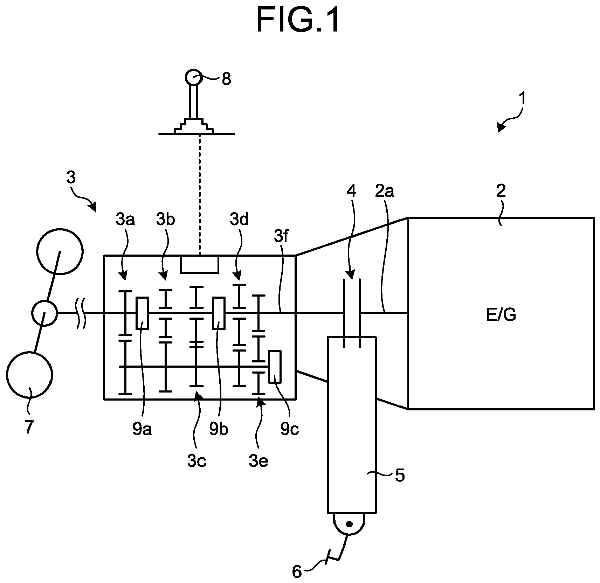

First, a configuration of a vehicle applied with a vehicle control device according to an embodiment of the present invention will be described with reference to FIG. 1.

FIG. 1 is a schematic view illustrating a configuration of a vehicle applied with a vehicle control device according to an embodiment of the present invention. As illustrated in FIG. 1, a vehicle 1 applied with a vehicle control device according an embodiment of the present invention includes an engine (E/G) 2 and a manual transmission 3. A power transmission path between the engine 2 and the manual transmission 3 is provided with a clutch 4 that functions as a connection and disconnection mechanism. The clutch 4 is appropriately connected and disconnected by a connection and disconnection device 5. A structure and an operation of the connection and disconnection device 5 will be described later.

The engine 2 is a driving force source that generates a driving force for traveling of a vehicle, and is configured by an internal combustion engine such as a gasoline engine or a diesel engine that generates a driving force by combustion of fuel injected into a cylinder, for example.

The clutch 4 is normally brought into an engaged state to connect the power transmission path between the engine 2 and the manual transmission 3. Further, by depression operation on a clutch pedal 6 or by a control operation by an electronic control unit 100, which is described later, the clutch 4 is brought into a slip state where a torque capacity decreases, or a power transmission cut-off state where the power transmission path between the engine 2 and the manual transmission 3 is cut off. Thus, the vehicle 1 includes a clutch-by-wire system that electrically controls an engagement and a release of the clutch 4 provided on the power transmission path between the engine 2 and a drive wheel 7, in response to a driver's depression operation of the clutch pedal 6.

The manual transmission 3 is a parallel two-shaft stepped transmission mechanism (manual transmission) that is provided in the power transmission path between the engine 2 and the drive wheel 7, and decelerates or accelerates and outputs a rotation inputted from the engine 2 at a predetermined gear ratio γ, by selecting one gear stage out of a plurality of gear stages (shift stages) in accordance with a manual operation of a shift lever 8 by the driver. The manual transmission 3 includes a plurality of gear pairs 3a to 3e that are constantly meshed between two rotary shafts, and for example, any one of five forward gear stages from a first gear stage to a fifth gear stage and a reverse gear stage is established when a gear pair corresponding to the gear stage to be shifted is connected between rotating shafts so that power can be transmitted.

The manual transmission 3 is provided with synchromesh mechanisms 9a to 9c that synchronize rotational speeds of the rotating shafts having different rotational speeds, and an operation of the synchromesh mechanisms 9a to 9c at the time of shifting enables smooth shifting. Further, when any gear stage is not selected, the manual transmission 3 is in a neutral state (a power transmission cut-off state). That is, when the shift lever 8 is operated to a shift an operation position corresponding to a predetermined gear stage, the manual transmission 3 is shifted to a selected gear stage. Further, when the shift lever 8 is shifted to a neutral position where any gear stage is not selected, the manual transmission 3 is in the neutral state. As described above, the vehicle 1 is configured by a manual transmission vehicle (MT vehicle) including the manual transmission 3 that selectively establishes a plurality of gear stages in accordance with the manual operation of the shift lever 8 by the driver.

### Configuration of clutch and connection and disconnection device

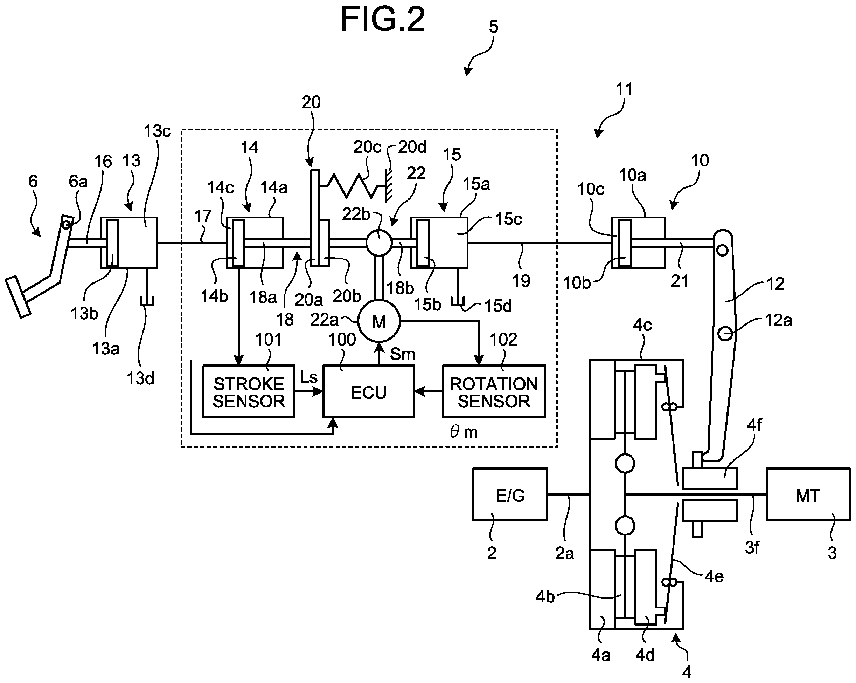

Next, a configurations of the clutch 4 and the connection and disconnection device 5 will be described with reference to FIG. 2. FIG. 2 is a schematic view illustrating a configuration of the clutch 4 and the connection and disconnection device 5. Note that FIG. 2 illustrates a state where an electric actuator 22, described later, is not in operation because the driver does not depress the clutch pedal 6.

As illustrated in FIG. 2, the clutch 4 includes a flywheel 4a attached to an output shaft 2a of the engine (E/G) 2, a clutch disc 4b attached to an input shaft 3f of the manual transmission (MT) 3, a clutch cover 4c connected to the flywheel 4a, a pressure plate 4d accommodated in the clutch cover 4c, a diaphragm spring 4e that generates a biasing force for pressing the clutch disc 4b against the flywheel 4a, and a release bearing 4f that is disposed on an outer peripheral side of the input shaft 3f and is movable relative to the input shaft 3f in an axial direction.

In a state where the clutch 4 is engaged, the pressure plate 4d and the clutch disc 4b are pressed against the flywheel 4a by the diaphragm spring 4e. At this time, the flywheel 4a and the clutch disc 4b are in a state of being close contact with each other. Whereas, when the release bearing 4f moves to the engine 2 side in the axial direction, an inner peripheral side of the diaphragm spring 4e is pressed, which causes deformation of the diaphragm spring 4e and reduces a biasing force for pressing the clutch disc 4b against the flywheel 4a. Further, when the release bearing 4f reaches a predetermined position, a biasing force of the diaphragm spring 4e to press the clutch disc 4b against the flywheel 4a becomes zero, and the clutch disc 4b is in a state of being separated from the flywheel 4a. At this time, the clutch 4 is released (cut off).

The connection and disconnection device 5 is provided to connect and disconnect the clutch 4. The connection and disconnection device 5 includes the clutch pedal 6 to be operated by the driver, a clutch release cylinder (hereinafter, release cylinder) 10 to which a power of the clutch pedal 6 is transmitted as an operating force, a power transmission mechanism 11 that transmits a power of the clutch pedal 6 as an operating force of the release cylinder 10, and a release fork 12 that transmits an operation amount of the release cylinder 10 to the release bearing 4f.

The clutch pedal 6 is rotated about a fulcrum 6a by being depressed by the driver.

The power transmission mechanism 11 forms a power transmission path between the clutch pedal 6 and the release cylinder 10. That is, the power transmission mechanism 11 connects the clutch pedal 6 and the release cylinder 10 so as to be able to transmit power (operatively).

The power transmission mechanism 11 includes a clutch master cylinder (hereinafter referred to as a master cylinder) 13 that converts a driver's depression force of the clutch pedal 6 into a hydraulic pressure, a first cylinder 14 operatively connected to the master cylinder 13, and a second cylinder 15 disposed between the first cylinder 14 and the release cylinder 10.

The clutch pedal 6 and the master cylinder 13 are operatively connected via a connection rod 16. The master cylinder 13 and the first cylinder 14 are operatively connected via a first oil passage 17. The first cylinder 14 and the second cylinder 15 are operatively connected via a connection rod 18. The second cylinder 15 and the release cylinder 10 are operatively connected via a second oil passage 19.

The master cylinder 13 includes a cylindrical cylinder body 13a, a disc-shaped piston 13b slidably incorporated in the cylinder body 13a, a hydraulic chamber 13c formed in the cylinder body 13a and filled inside with hydraulic oil, and a reservoir tank 13d for storage of hydraulic oil. The piston 13b and the clutch pedal 6 are mechanically connected via the connection rod 16, and the piston 13b moves in the cylinder body 13a in accordance with a depression amount when the clutch pedal 6 is depressed. At this time, an oil pressure is generated in the hydraulic chamber 13c.

The first cylinder 14 includes a cylindrical cylinder body 14a, a disc-shaped piston 14b slidably incorporated in the cylinder body 14a, and a hydraulic chamber 14c formed in the cylinder body 14a and filled with hydraulic oil. The hydraulic chamber 13c of the master cylinder 13 and the hydraulic chamber 14c of the first cylinder 14 are operatively connected via the first oil passage 17. Specifically, a hydraulic pressure generated in the master cylinder 13 is transmitted to the first cylinder 14 via the first oil passage 17, which causes the piston 14b of the first cylinder 14 to be pressed, resulting in movement of the piston 14b in the cylinder body 14a.

The second cylinder 15 includes a cylindrical cylinder body 15a, a disc-shaped piston 15b slidably incorporated in the cylinder body 15a, a hydraulic chamber 15c formed in the cylinder body 15a and filled with hydraulic oil, and a reservoir tank 15d. The piston 14b of the first cylinder 14 and the piston 15b of the second cylinder 15 are operatively connected via the connection rod 18, and when the piston 14b moves in the axial direction toward the release cylinder 10, the piston 15b moves via the connection rod 18 in the axial direction by the same amount of movement. The connection rod 18 includes a first rod 18a and a second rod 18b arranged in series, and a separating mechanism 20 is interposed between the first rod 18a and the second rod 18b.

The release cylinder 10 includes a cylindrical cylinder body 10a, a disk-shaped piston 10b slidably incorporated in the cylinder body 10a, and a hydraulic chamber 10c formed in the cylinder body 10a and filled with a hydraulic oil. The hydraulic chamber 10c of the release cylinder 10 and the hydraulic chamber 15c of the second cylinder 15 are operatively connected via the second oil passage 19. Specifically, a hydraulic pressure generated in the hydraulic chamber 15c by the piston 15b of the second cylinder 15 being moved is transmitted to the release cylinder 10 via the second oil passage 19, which causes the piston 10b of the release cylinder 10 to be pressed, resulting in a movement of the piston 10b. Further, a push rod 21 is connected to the piston 10b, and the push rod 21 moves integrally with the piston 10b.

From the above, in the power transmission mechanism 11, a depression force when the clutch pedal 6 is depressed is transmitted as an operating force of the release cylinder 10, via a clutch master cylinder 13, the first oil passage 17, the first cylinder 14, the connection rod 18, the second cylinder 15, and the second oil passage 19. When the operating force is transmitted to the release cylinder 10, the push rod 21 connected to the piston 10b of the release cylinder 10 is axially moved to press one end portion of the release fork 12. At this time, the release fork 12 is rotated about a fulcrum 12a, and the other end portion of the release fork 12 presses the release bearing 4f of the clutch 4, which causes the clutch 4 to be released along with the movement of the release bearing 4f.

To the second rod 18b forming the connection rod 18, the electric actuator 22 is connected. The electric actuator 22 is connected to the second rod 18b while being able to transmit power so as to be able to apply an operating force to the release cylinder 10 via the second rod 18b (power transmission mechanism 11). The electric actuator 22 includes an electric motor (M) 22a and a reduction gear 22b connected to the second rod 18b so as to be able to transmit power.

The electric motor 22a is rotationally driven by the electronic control unit (ECU) 100. The reduction gear 22b is, for example, a mechanism that is formed of a ball screw and converts rotational driving of the electric motor 22a into an axial translational movement of the second rod 18b. Therefore, when the electric motor 22a is rotationally driven, an operating force in the axial direction is applied to the second rod 18b, and the second rod 18b is moved in the axial direction in accordance with a rotational position thereof.

Between the first rod 18a and the second rod 18b that form the connection rod 18, the separating mechanism 20 that can connect and disconnect these is provided. In other words, the separating mechanism 20 is provided on the power transmission mechanism 11 and between the clutch pedal 6 and the electric actuator 22 (the reduction gear 22b). The separating mechanism 20 includes a flat plate-shaped first member 20a connected to an axial end of the first rod 18a, a flat plate-shaped second member 20b connected to an axial end of the second rod 18b, and a pedal position holding mechanism 20c connected to the first member 20a. The first member 20a interlocks with the clutch pedal 6 via the master cylinder 13 and the first cylinder 14. The second member 20b interlocks the second cylinder 15 with the release cylinder 10.

The first member 20a and the second member 20b are disposed such that the plate surfaces thereof face each other, and are configured such that the plate surfaces are in contact with each other in a state where the clutch pedal 6 is depressed. The pedal position holding mechanism 20c is interposed between the first member 20a and a fixing member 20d. The pedal position holding mechanism 20c is formed of an elastic member such as a spring, and generates a holding force for holding the first member 20a at a depression release position where the depression of the clutch pedal 6 is released. The position of the first member 20a illustrated in FIG. 2 corresponds to the depression release position. In the case of FIG. 2, the depression of the clutch pedal 6 is released, and at this time, the first member 20a is held at the depression release position by a holding force of the pedal position holding mechanism 20c. Note that the holding force is determined in advance experimentally or by design, and is set to at least such magnitude that the clutch pedal 6 does not move when the driver merely puts foot on the clutch pedal 6.

In FIG. 2, by a biasing force from the diaphragm spring 4e being transmitted via the release bearing 4f, the release fork 12, the release cylinder 10, the second cylinder 15, and the second rod 18b, the second member 20b has been moved to a position where the clutch 4 is brought into a state of being fully engaged. In the present embodiment, when the driver does not depress the clutch pedal 6 and the electric actuator 22 is in a non-operation state, the first member 20a and the second member 20b are adjusted so as to contact each other in the separating mechanism 20.

A drive state of the electric actuator 22 is controlled by the electronic control unit 100. The electronic control unit 100 includes, for example, a microcomputer provided with a central processing unit (CPU), a random access memory (RAM), a read only memory (ROM), an input/output interface and the like, and controls a drive state of the electric actuator 22 by executing a signal process in accordance with a computer program stored in advance in the ROM while the CPU utilizes a temporary storage function of the RAM.

Into the electronic control unit 100, various signals are input, such as a signal Ls indicating a stroke position of the piston 14b of the first cylinder 14 corresponding to a pedal stroke position of the clutch pedal 6 detected by a stroke sensor 101 and a signal θm that is detected by a rotation sensor 102 and represents a rotational position of the electric motor 22a related to an operating state of the clutch 4. Whereas, a drive signal Sm of the electric motor 22a is inputted from the electronic control unit 100.

Further, when an operation of the clutch pedal 6 is determined, the electronic control unit 100 controls the electric actuator 22 (electric motor 22a) to execute assist control for applying an operating force (hereinafter referred to as an assist force) to the release cylinder 10 in a direction in which a depression force of the clutch pedal 6 is reduced, in other words, in a direction in which the clutch 4 is released. Specifically, the electronic control unit 100 assists in the lack of a depression force necessary for the actual clutch pedal operation, by generating an assist force from the electric actuator 22 such that a depression force of the clutch pedal 6 becomes a target clutch pedal depression force that is set in accordance with the pedal stroke position.

### Configuration of vehicle control device

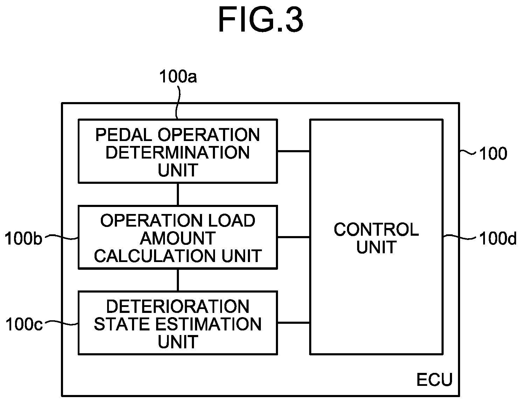

Next, with reference to FIG. 3, a configuration of a vehicle control device according to an embodiment of the present invention will be described.

FIG. 3 is a block diagram illustrating a configuration of a vehicle control device according to an embodiment of the present invention. As illustrated in FIG. 3, the vehicle control device according to an embodiment of the present invention is configured by the electronic control unit 100. Then, the electronic control unit 100 functions as a pedal operation determination unit 100a, an operation load amount calculation unit 100b, a deterioration state estimation unit 100c, and a control unit 100d, when the CPU executes a computer program. The functions of these units will be described later.

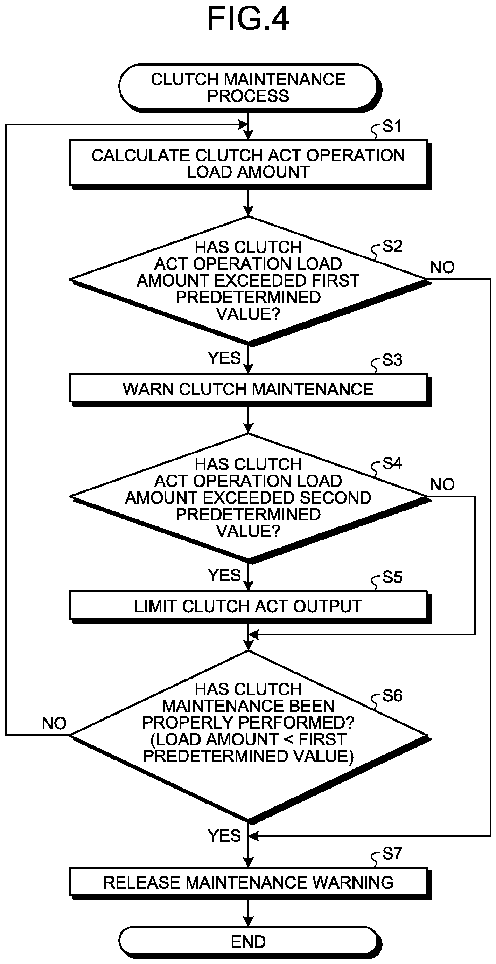

In a vehicle control device having such a configuration, by the electronic control unit 100 executing a clutch maintenance process described below, the driver is made to recognize a reduction in efficiency due to wear of the clutch 4 or deterioration with time (for example, an increase of a sliding resistance of a release mechanism and the like) of an operation system of the clutch 4. Hereinafter, an operation of the electronic control unit 100 in executing the clutch maintenance process will be described with reference to the flowchart illustrated in FIG. 4.

### Clutch maintenance process

FIG. 4 is a flow chart illustrating a flow of a clutch maintenance process according to an embodiment of the present invention. The flowchart illustrated in FIG. 4 starts at the timing at which the pedal operation determination unit 100a detects an operation of the clutch pedal 6 on the basis of an input signal from the stroke sensor 101, and the clutch maintenance process proceeds to the process of step S1.

In the process of step S1, the operation load amount calculation unit 100b detects an amount of current applied to the electric actuator 22 (electric motor 22a), and calculates, as a clutch ACT operation load amount, an amount of an increase of an output torque of the electric actuator 22 necessary for the operation of the clutch 4 with respect to an output torque that has been set in accordance with the pedal stroke position of the clutch pedal 6, on the basis of the detected amount of the current. Note that, as a calculation method of the clutch ACT operation load amount, the method described in Patent Document 2 can be exemplified. Thus, the process of step S1 is completed, and the clutch maintenance process proceeds to the process of step S2.

In the process of step S2, the deterioration state estimation unit 100c determines whether the clutch ACT operation load amount calculated in the process of step S1 is equal to or greater than a first predetermined value. As a result of the determination, when the clutch ACT operation load amount is equal to or greater than the first predetermined value (step S2: Yes), the deterioration state estimation unit 100c determines that the wear amount of the clutch 4 is equal to or greater than a second threshold value, and advances the clutch maintenance process to the process of step S3. Whereas, when the clutch ACT operation load amount is less than the first predetermined value (step S2: No), the deterioration state estimation unit 100c determines that the wear amount of the clutch 4 is not equal to or not greater than the second threshold value, and ends the series of clutch maintenance processes.

In the process of step S3, the deterioration state estimation unit 100c outputs warning information for urging a maintenance of the clutch, by controlling a warning device such as a meter indicator or a buzzer. Thus, the process of step S3 is completed, and the clutch maintenance process proceeds to the process of step S4.

In the process of step S4, the deterioration state estimation unit 100c determines whether the clutch ACT operation load amount calculated in the process of step S1 is equal to or greater than a second predetermined value, which is greater than the first predetermined value. As a result of the determination, when the clutch ACT operation load amount is equal to or greater than the second predetermined value (step S4: Yes), the deterioration state estimation unit 100c determines that the wear amount of the clutch 4 is equal to or greater than a first threshold value greater than the second threshold value, and advances the clutch maintenance process to the process of step S5. Whereas, when the clutch ACT operation load amount is less than the second predetermined value (step S4: No), the deterioration state estimation unit 100c determines that the wear amount of the clutch 4 is not equal to or not greater than the first threshold value greater than the second threshold value, and advances the clutch maintenance process to the process of step S6.

In the process of step S5, the control unit 100d changes an operation feeling of the clutch pedal 6 by limiting the assist force (clutch ACT output) of the electric actuator 22. Note that, in the present embodiment, the operation feeling of the clutch pedal 6 is changed when the clutch ACT operation load amount is equal to or greater than the second predetermined value, but the operation feeling of the clutch pedal 6 may be changed at the timing when an elapsed time, a traveling distance of the vehicle 1, the number of times of traveling of the vehicle 1 or the like from a time point when the warning information is outputted in the process of step S3 has become equal to or greater than a predetermined value. Thus, the process of step S5 is completed, and the clutch maintenance process proceeds to the process of step S6.

In the process of step S6, the operation load amount calculation unit 100b calculates the clutch ACT operation load amount. Then, the deterioration state estimation unit 100c determines whether the maintenance of the clutch 4 has been properly performed by determining whether or not the clutch ACT operation load amount has become less than the first predetermined value. As a result of the determination, when the clutch ACT operation load amount has become less than the first predetermined value (step S6: Yes), the deterioration state estimation unit 100c determines that maintenance of the clutch 4 has been appropriately performed, and advances the clutch maintenance process to the process of step S7. Whereas, when the clutch ACT operation load amount has not become less than the first predetermined value (step S6: No), the deterioration state estimation unit 100c determines that maintenance of the clutch 4 has not been properly performed, and returns the clutch maintenance process to the process of step S1.

In the process of step S7, the deterioration state estimation unit 100c stops the output of the warning information for urging maintenance of the clutch 4 (release of maintenance warning). Thus, the process of step S7 is completed, and a series of clutch maintenance processes is ended.

As apparent from the above descriptions, in the clutch maintenance process according to an embodiment of the present invention, the electronic control unit 100 determines that the wear amount of the clutch 4 has exceeded the first threshold value and changes the operation feeling of the clutch pedal 6 when the clutch ACT operation load amount is equal to or greater than the second predetermined value. Therefore, the driver can be made to recognize wear of the clutch 4 even in a vehicle equipped with a clutch-by-wire system.

Further, in the clutch maintenance process according to an embodiment of the present invention, when the clutch ACT operation load amount is equal to or greater than the first predetermined value, which is less than the second predetermined value, the electronic control unit 100 determines that the wear amount of the clutch 4 has exceeded the second threshold value less than the first threshold value, and outputs warning information for urging maintenance of the clutch 4. This allows the driver to be urged to perform maintenance on the clutch 4 before the wear amount of the clutch 4 exceeds the first threshold value.

Further, in the clutch maintenance process according to an embodiment of the present invention, the electronic control unit 100 changes the operation feeling of the clutch pedal 6 by limiting the output of the electric actuator 22 that assists the operation force of the clutch pedal 6. This allows the driver to feel discomfort and to recognize wear of the clutch 4 in operating the clutch 4.

The embodiment applied with the present invention made by the inventors has been described above, but the present invention is not limited by the description and the drawings that form a part of the disclosure of the present invention according to this embodiment. Specifically, in the present embodiment, the operation feeling of the clutch 4 is changed by limiting the assist amount of the operation force of the clutch pedal 6, but the operation feeling of the clutch 4 may be changed by another method. For example, in a system having a hydraulic circuit changeover mechanism as described in Patent Document 3, the operation feeling of the clutch may be changed by stopping an output of a clutch actuator and switching from the clutch pedal to the hydraulic circuit capable of directly operating the clutch. When the output of the clutch actuator is stopped, the operation force of the clutch pedal becomes heavy, which can give the driver the sense of discomfort in operating the clutch. Further, for example, in a system in which the clutch actuator is operated individually by the clutch actuator in accordance with the operation force of the clutch pedal, the operation feeling of the clutch may be changed by limiting an operation speed of the clutch by the clutch actuator. Limiting the operation speed of the clutch can give the driver the sense of discomfort due to occurrence of catching at a time of a shift operation or difficulty of control against engine stall. Thus, all other embodiments, examples, operation techniques and the like made by those skilled in the art on the basis of the present embodiment are included in the scope of the present invention.

## Claims

1. A vehicle control device comprising: a clutch-by-wire system configured to electrically control an engagement and a release of a clutch, which is provided on a power transmission path between an engine and a drive wheel, in response to a driver's operation of a clutch pedal, the vehicle control device further comprising:
a control unit configured to change an operation feeling of the clutch pedal when a wear amount of the clutch exceeds a first threshold value.

2. The vehicle control device according to claim 1, wherein the control unit is configured to output warning information for urging a maintenance of the clutch when the wear amount of the clutch exceeds a second threshold value, which is less than the first threshold value.

3. The vehicle control device according to claim 1 or 2, wherein the control unit is configured to change the operation feeling of the clutch pedal by limiting an output of an assist mechanism that assists an operation force of the clutch pedal.

4. The vehicle control device according to claim 1 or 2, wherein the control unit is configured to change the operation feeling of the clutch pedal by stopping an output of the assist mechanism that assists an operation force of the clutch pedal and switching from the clutch pedal to a hydraulic circuit capable of directly operating the clutch.

5. The vehicle control device according to claim 1 or 2, wherein the control unit is configured to change the operation feeling of the clutch pedal by limiting an operation speed of the clutch by an assist mechanism that assists an operation force of the clutch pedal.
